# EUROPÄISCHE PATENTSCHRIFT

(11) **EP 3 079 924 B1**
(45) Veröffentlichungstag und Bekanntmachung des Hinweises auf die Patenterteilung: **20.02.2019**
(21) Anmeldenummer: 14766178.9
(22) Anmeldetag: 16.09.2014
(51) Int. Cl.: B60C 11/03

(54) **FAHRZEUGLUFTREIFEN**
PNEUMATIC VEHICLE TYRE
PNEUMATIQUE DE VÉHICULE

(30) Priorität: 09.12.2013 DE 102013225302
(43) Veröffentlichungstag der Anmeldung: 19.10.2016
(73) Patentinhaber: Continental Reifen Deutschland GmbH, 30165 Hannover (DE)
(72) Erfinder: BRANDAU, Christian, 30419 Hannover (DE); DIENSTHUBER, Franz, 60528 Frankfurt (DE)
(74) Vertreter: Finger, Karsten
(86) Internationale Anmeldenummer: PCT/EP2014/069664
(87) Internationale Veröffentlichungsnummer: WO 2015/086181

(56) Entgegenhaltungen:
- DE-A1-102011 082 659
- DE-U1- 8 007 151
- GB-A- 2 056 925
- JP-A- 2009 196 527
- US-A- 3 023 798
- US-B2- 7 207 364

## Beschreibung

### Fahrzeugluftreifen

Die Erfindung betrifft einen Fahrzeugluftreifen, insbesondere für den Einsatz unter winterlichen Fahrbedingungen, mit einem Laufstreifen, welcher durch Schrägrillen sowie Umfangsrillen in Blockreihen gegliedert ist, deren Blöcke jeweils mit einer Anzahl von Einschnitten versehen sind, welche zumindest im Wesentlichen parallel zueinander und zu Schrägrillen verlaufen und die Blöcke in Blockelemente gliedern, wobei in einem in Umfangsrichtung umlaufenden Umfangsbereich einander benachbart angeordnete Blöcke über schmale Brücken an den inneren Enden von sacknutartig endenden Schrägrillen miteinander verbunden sind, wobei die Brücken in Querrichtung gegeneinander abwechselnd versetzt sind, sodass in diesem Umfangsbereich mäanderartig zusammenhängende Profilpositivstrukturen gebildet sind.

Derartige für den Einsatz unter winterlichen Fahrbedingungen geeignete Fahrzeugluftreifen sind in unterschiedlichen Ausführungsvarianten bekannt. So ist beispielsweise aus der US 7 207 364 B2 ein Fahrzeugluftreifen der eingangs genannten Art bekannt, welcher einen Laufstreifen mit Blockreihen aufweist, wobei im mittleren Laufstreifenbereich Blockreihen angeordnet sind, welche jeweils mit parallel zueinander verlaufenden sacknutartig endenden Schrägrillen versehen sind, die abwechselnd von der einen, die Blockreihe begrenzenden Umfangsrille, und von der anderen, die Blockreihe begrenzenden Umfangsrille, in die Blockreihe hinein verlaufen. Die Blockreihen sind ferner mit parallel zu den Schrägrillen verlaufenden Einschnitten versehen.

Aus der DE 10 2011 082 659 A1 ist ein Fahrzeugluftreifen mit einem Laufstreifen bekannt, welcher ebenfalls beidseitig durch Umfangsrillen begrenzte Blockreihen aufweist. Die Blockreihen sind durch die Umfangsrillen verbindende Schrägrillen in langgestreckte Blöcke gegliedert, welche mit sacknutartig endenden Schrägrillen versehen sind. Die JP 2009 196 527 A offenbart einen Fahrzeugluftreifen mit einem Laufstreifen mit Blockreihen, denen Blöcke durch in Querrichtung orientierte Einschnitte doppelblockartig gestaltet sind. Zwischen zwei im zentralen Laufstreifenbereich verlaufenden, derart gestalteten Blockreihen befindet sich ein schmaler in Umfangsrichtung verlaufender Einschnitt. Aus der DE 80 07 151 U1 und der GB 2 056 925 A sind Fahrzeugluftreifen mit Laufstreifen mit in Draufsicht mäanderförmig in Umfangsrichtung verlaufenden Profilrippen bekannt.

Aus der DE 10 2009 044 620 A1 ist ein Fahrzeugluftreifen bekannt, welcher im Laufstreifen Blöcke aufweist, deren Einschnitte mit der Laufstreifenquerrichtung unterschiedlich große Winkel einschließen, um die Umfangssteifigkeit der Blöcke gezielt zu beeinflussen. Aus der EP 2 353 884 A1 ist ein Fahrzeugluftreifen mit einem Laufstreifen bekannt, welcher asymmetrisch gestaltet ist und, auf das Fahrzeug bezogen, einen Außenbereich und einen Innenbereich aufweist, wobei in diesen Bereichen unterschiedliche Profilstrukturen vorgesehen sind. Die Profilstrukturen sind derart ausgeführt, dass im Innenbereich des Laufstreifens der schulterseitige Umfangsbereich eine um mindestens 10% geringere Quersteifigkeit und eine um mindestens 15 % größere Umfangssteifigkeit aufweist als die Profilstrukturen im schulterseitigen Umfangsbereich im Außenbereich des Laufstreifens. Ein mit einem solchen Laufstreifen versehener Reifen soll vor allem Kurvenfahrten im Grenzbereich ermöglichen und ein hohes Reaktionsvermögen auf Lenkbewegungen sicherstellen.

Bei der Entwicklung von Winterreifen steht vor allem die Optimierung von Schnee- und Eisperformance im Vordergrund. Die Schneeperformance wird vor allem durch drei Hauptwirkmechanismen, nämlich die Gummi-Schneereibung, die Schnee-Schneereibung und die Kantenwirkung durch die Profilblöcke und Einschnitte bestimmt. Beim Abrollen des Reifens und beim Abrollen der Profilblöcke am Untergrund verformen sich die Blockelemente, die durch die Einschnitte in den Blöcken gebildet sind, und bilden dabei die für eine gute Schneeperformance erforderlichen Griffkanten aus. Was für die Schneeperformance von Vorteil ist, kann auf vereisten Fahrbahnen von Nachteil sein. Auf vereisten Fahrbahnen neigen die einzelnen Blockelemente in der Kontaktfläche zum Untergrund zum Kippen und reduzieren dadurch die Kontaktfläche des jeweiligen Blockes zum Untergrund und damit die übertragbare Kraft.

Der Erfindung liegt die Aufgabe zugrunde, das Kippen der einzelnen Blockelemente auf eisigem Untergrund zu reduzieren, jedoch weiterhin das Ausbilden von Griffkanten für eine gute Schneeperformance sicherzustellen.

Gelöst wird die gestellte Aufgabe erfindungsgemäß dadurch, dass der Umfangsbereich zwei nebeneinander verlaufende Blockreihen aufweist, deren Blöcke einander in Querrichtung teilweise überlappen, wobei die sacknutartig endenden Schrägrillen zwischen den Blöcken der ersten Blockreihe unter einem im Wesentlichen gleich großen Winkel zwischen 15° bis 35° sowie gegensinnig zu und abwechselnd mit den sacknutartig endenden Schrägrillen zwischen den Blöcken der zweiten Blockreihe verlaufen und wobei die Einschnitte parallel zu jenen Schrägrillen verlaufen, die zwischen den Blöcken der ersten Blockreihe verlaufen.

Durch die erfindungsgemäße Verbindung der Blöcke über Brücken wird sichergestellt, dass vor allem die den Querrillen oder Schrägrillen benachbarten Blockelemente kaum mehr zum Kippen neigen, wenn sie beim Abrollen des Reifens mit vereistem Untergrund in Kontakt kommen. Die Kontaktfläche zum Untergrund bleibt daher erhalten und es können Brems- und Traktionskräfte besser übertragen werden. Nachdem die Brücken derart angeordnet sind, dass sie in Querrichtung gegeneinander versetzte Verbindungen zwischen Blöcken schaffen, wird auch die Umfangssteifigkeit der betreffenden Blöcke nicht beeinträchtigt und es können sich auf schneeigem Untergrund die für eine gute Schneeperformance erforderlichen Griffkanten zwischen den einzelnen Blockelementen nach wie vor gut ausbilden. Der Umfangsbereich weist zwei nebeneinander verlaufende Blockreihen auf, deren Blöcke einander in Querrichtung teilweise überlappen und durch die Brücken, die in Querrichtung des Laufstreifens abwechselnd gegeneinander versetzt sind, miteinander verbunden sind. Bei dieser erfindungsgemäßen Ausführungsform kann somit die Umfangs- und die Quersteifigkeit in diesem Umfangsbereich in erwünschter Weise zur Optimierung von Schnee- und Eisperformance beeinflusst werden. Für einen guten Schneegriff ist es ferner vorteilhaft, wenn bei einem Umfangsbereich mit zwei nebeneinander verlaufenden Blockreihen, in Umfangsrichtung betrachtet, die sacknutartig endenden Schrägrillen zwischen den Blöcken der einen Blockreihe gegensinnig zu und abwechselnd mit den sacknutartig endenden Schrägrillen zwischen den Blöcken der zweiten Blockreihe verlaufen. Nachdem die Einschnitte in sämtlichen Blöcken dieser beiden Blockreihen parallel zu den einen Schrägrillen verlaufen, wird dieser Umfangsbereich durch die Anordnung der Einschnitte vergleichsweise weich, was ebenfalls für eine Optimierung des Schneegriffes von Vorteil ist.

Für die mit den Brücken erzielbaren Effekte ist es vorteilhaft, wenn die Brücken eine in Fortsetzung des Verlaufes der Querrillen oder der Schrägrillen ermittelte Breite aufweisen, die mindestens 1,5 mm und bis zu 7 mm beträgt.

Weitere Merkmale, Vorteile und Einzelheiten der Erfindung werden nun anhand der Zeichnung, die Ausführungsbeispiele darstellt, näher beschrieben. Dabei zeigen
Fig. 1 schematisch eine Draufsicht auf Profilpositive eines Laufstreifens eines Fahrzeugluftreifens mit einer Basisvariante,
Fig. 2 in einer zu Fig. 1 analogen Darstellung eine Ausführungsvariante der Erfindung und
Fig. 3 eine Draufsicht auf eine Teilabwicklung eines Laufstreifens eines Fahrzeugluftreifens mit der in Fig. 2 gezeigten Ausführungsvariante der Erfindung.

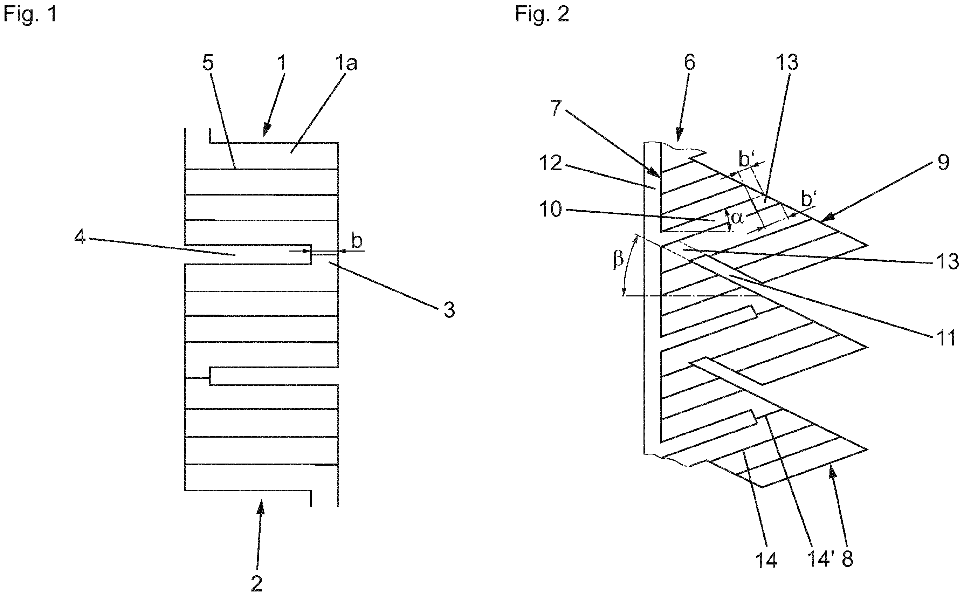

Bei der in Fig. 1 gezeigten Basisvariante sind die Profilpositive rechteckige Blöcke 1 einer in Umfangsrichtung des Laufstreifens umlaufenden Blockreihe 2, wobei die Blöcke 1 abwechselnd am linken und am rechten in Umfangsrichtung verlaufenden Randbereich miteinander über jeweils eine schmale Brücke 3 verbunden sind. Die Brücken 3 weisen die gleiche radiale Erstreckung wie die Blöcke 1 auf, ihre Außenflächen fluchten daher mit den Außenflächen der Blöcke 1. Die Brücken 3 weisen in dieser Ausführungsform eine konstante Breite b von maximal 7 mm, insbesondere von 1,5 mm bis 5 mm, auf. Durch die Brücken 3 sind die zwischen den in Umfangsrichtung benachbarten Blöcken 1 verlaufenden Querrillen 4 verkürzt, sie bilden sacknutartig endende, bei der gezeigten Ausführungsform exakt in Querrichtung verlaufende Querrillen 4. Die Profilpositive, die Blöcke 1, sind durch diese Brücken 3 zu mäanderartig zusammenhängenden Profilpositivstrukturen verbunden. Die Blöcke 1 sind durch schmale, 0,4 mm bis 0,6 mm breite, bei der gezeigten Ausführungsform gerade und parallel zu den Querrillen 4 verlaufende Einschnitte 5 in im Wesentlichen gleich große Blockelemente 1a gegliedert. Die Einschnitte 5 können über ihre Erstreckung in variierender Tiefe ausgeführt sein, insbesondere weisen die Einschnitte 5 in bekannter Weise seichte Randabschnitte und einen tiefen Mittelabschnitt auf. Die Einschnitte 5 sind vor allem für die Schneeperformance des Reifens von Bedeutung, da sie beim Abrollen der Blöcke 1 am Untergrund durch Verformung der Blockelemente la Griffkanten ausbilden können. Auf vereisten Fahrbahnen neigen die Blockelemente 1a in Blöcken herkömmlich ausgeführter Blockreihen beim Abrollen am Untergrund zum Kippen, wodurch sich die Kontaktfläche der Blöcke am Untergrund und damit auch die übertragbare Kraft verringert. Durch die Brücken 3 wird ein Kippen weitgehend verhindert und es bleibt die Kontaktfläche der Blöcke 1 zum Untergrund weitgehend erhalten. Als zusätzlicher Effekt wird ein "Einrollen" der jeweils vorderen Blockkanten bei einwirkenden Umfangskräften verhindert. Dieses "Einrollen" reduziert ebenfalls die Kontaktfläche herkömmlich ausgeführter Blöcke zum Untergrund. Durch die abwechselnde Anordnung der Brücken 3 an den Randbereichen der Blockreihe 2 ist sichergestellt, dass sich die Blöcke 1 auf schneeigem Untergrund nach wie vor verformen können, sodass die Blockelemente la die für die erwünschte Schneeperformance erforderlichen Griffkanten ausbilden können. Die abwechselnde Anordnung der Brücken 3 innerhalb der Blockreihe 2 ist ferner für eine Vergleichmäßigung der Umfangssteifigkeit der Blockreihe 2 vorteilhaft.

Bei der in Fig. 2 gezeigten Ausführungsform sind zwei Blockreihen 6, 8 vorgesehen, deren Blöcke 7, 9 in Laufstreifenquerrichtung einander teilweise überlappen. Bei der gezeigten Ausführungsform sind die Blöcke 9 in Draufsicht im Wesentlichen parallelogrammförmig, die Blöcke 7 im Wesentlichen trapezförmig. Die Blöcke 7 besitzen in Umfangsrichtung verlaufende Randkanten, die eine in Umfangsrichtung umlaufende Umfangsrille 12 begrenzen. Von der Umfangsrille 12 aus verlaufen erste Schrägrillen 10 unter einem Winkel α, welcher für sämtliche Schrägrillen 10 im Wesentlichen gleich groß ist und zwischen 15° und 35° beträgt. Die Schrägrillen 10 begrenzen sowohl die Blöcke 7 als auch die Blöcke 9. Zweite, gegensinnig zu den Schrägrillen 10 verlaufende Schrägrillen 11 verlaufen von der anderen, der Umfangsnut 12 abgewandten Seite, zwischen die Blöcke 7 und 9 unter einem Winkel β zur Umfangsrichtung, welcher zwischen 30° und 45° beträgt und für sämtliche Schrägrillen 11 zumindest im Wesentlichen gleich groß ist. In Umfangsrichtung betrachtet wechselt sich eine Schrägrille 10 jeweils mit einer Schrägrille 11 ab. Die Schrägrillen 10, 11 sind keine zwischen den Blöcken 7 bzw. 9 durchgehenden Rillen - in diesem Fall würden die Schrägrillen 10, 11, wie in Fig. 2 bei zwei Rillen 10, 11 angedeutet, jeweils ineinander einmünden - sondern es überbrücken schmale Brücken 13 die Einmündungsbereiche und verbinden die Blöcke 7, 9 miteinander. Die Brücken 13 weisen, in Verlängerung der Erstreckung der Schrägrillen 10, 11 ermittelt, eine Breite b' auf, die bei Brücken 13 variieren kann und mindestens 1,5 mm, höchstens 6 mm beträgt. Auf diese Weise sind die Blöcke 7 und 9 der beiden Blockreihen 6 und 8 zu in Umfangsrichtung mäanderartig verbundenen Profilpositivstrukturen zusammengehängt.

Die Blöcke 7, 9 sind mit einer Vielzahl von parallel zueinander und bei der gezeigten Ausführungsform parallel zu den Schrägrillen 10 verlaufenden Einschnitten 14 versehen. Wie Fig. 1 und Fig. 2 zeigen kann jeweils ein Einschnitt 5, 14 die Brücken 3, 13 durchqueren.

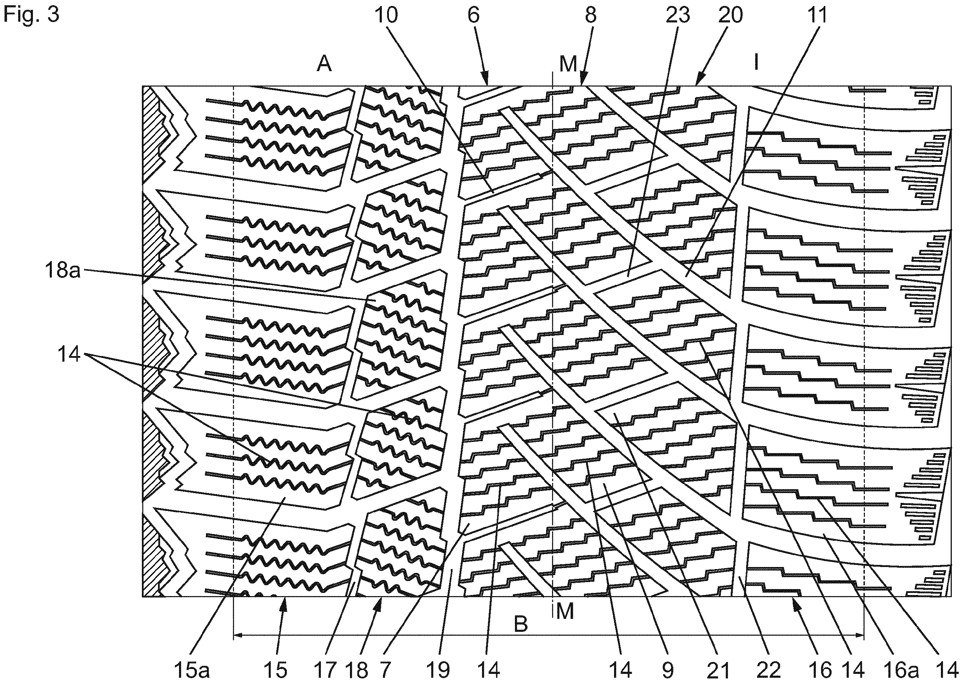

Fig. 3 zeigt eine Ausführungsvariante eines Laufstreifens, bei dem auf die in Fig. 2 gezeigte Weise miteinander mäanderförmig verbundene Blöcke 7, 9 im mittleren Bereich des Laufstreifens angeordnet sind. Der in dieser Figur gezeigte Laufstreifen ist für Winterreifen von Personenkraftwagen vorgesehen und ein sogenannter asymmetrischer Laufstreifen, welcher einen definierten Außenbereich A und einen definierten Innenbereich I aufweist, wobei sich die Profilstrukturen im Außenbereich A von jenen im Innenbereich I, wie noch beschrieben wird, unterscheiden. Der Außenbereich A ist jener, welcher bei am Fahrzeug montiertem Reifen der Fahrzeuglängsachse abgewandt ist. Mit B ist die Breite des bodenberührenden Teils des Laufstreifens, die Breite der Bodenaufstandsfläche, ermittelt gemäß den E.T.R.T.O.-Standards, und mit M-M ist die mittlere Umfangslinie, der Reifenäquator, bezeichnet.

Sowohl im Außen- als auch im Innenbereich A, I weist der Laufstreifen schulterseitig jeweils eine Blockreihe 15, 16 mit Blöcken 15a, 16a auf. An die Schulterblockreihe 15 im Laufstreifenaußenbereich A schließt, durch eine in Umfangsrichtung umlaufende Umfangsrille 17 von dieser getrennt, eine weitere Blockreihe 18 mit Blöcken 18a an, die laufstreifeninnenseitig ebenfalls durch eine Umfangsrille 19 begrenzt ist. Die Umfangsrille 19 ist jene, die die beiden mäanderartig miteinander verbundenen Blockreihen 6 und 8 begrenzt. Wie Fig. 3 zeigt, befinden sich dabei diese beiden Blockreihen 6 und 8 im Wesentlichen im mittleren Drittel des Laufstreifens. Eine weitere Blockreihe 20 mit Blöcken 21 befindet sich zwischen der Schulterblockreihe 16 und der Blockreihe 8, von letzterer durch eine Umfangsrille 22 getrennt. Die zwischen den Blöcken 7, 9 verlaufenden Schrägrillen 11 sind zwischen den Blöcken 21 bis zur Umfangsrille 22 fortgesetzt. Weitere Schrägrillen 23, die im Wesentlichen parallel zu den Schrägrillen 10 orientiert sind, trennen die Blöcke 21 von den Blöcken 9. Sämtliche Schrägrillen 10, 11 und 23 weisen eine Breite von 2 mm bis 4 mm auf. Sämtliche Blöcke 7, 9, 15a, 16a, 18a und 21 sind ferner jeweils mit einer Vielzahl von Einschnitten 14versehen, die in Draufsicht einen wellen-, zickzack,- oder treppenförmigen Verlauf aufweisen.

### Bezugsziffernliste

- 1: Block
- 1a: Blockelement
- 2: Blockreihe
- 3: Brücke
- 4: Querrille
- 5: Einschnitt
- 6: Blockreihe
- 7: Block
- 8: Blockreihe
- 9: Block
- 10: Schrägrille
- 11: Schrägrille
- 12: Umfangsrille
- 13: Stege
- 14: Einschnitt
- 15: Blockreihe
- 15a: Block
- 16: Blockreihe
- 16a: Block
- 17: Umfangsrille
- 18: Blockreihe
- 18a: Block
- 19: Umfangsrille
- 20: Blockreihe
- 21: Block
- 22: Umfangsrille
- 23: Schrägrille
- A: Außenbereich
- B: Bodenaufstandsfläche
- I: Innenbereich
- M-M: Reifenäquator
- b, b': Breite
- α: Winkel
- β: Winkel

## Patentansprüche

1. Fahrzeugluftreifen, insbesondere für den Einsatz unter winterlichen Fahrbedingungen, mit einem Laufstreifen, welcher durch Schrägrillen (10, 11) sowie Umfangsrillen (12) in Blockreihen (6, 8) gegliedert ist, deren Blöcke (7, 9) jeweils mit einer Anzahl von Einschnitten (14) versehen sind, welche zumindest im Wesentlichen parallel zueinander und zu Schrägrillen (10, 11) verlaufen und die Blöcke (7, 9) in Blockelemente (1a) gliedern, wobei in einem in Umfangsrichtung umlaufenden Umfangsbereich einander benachbart angeordnete Blöcke (7, 9) über schmale Brücken (13) an den inneren Enden von sacknutartig endenden Schrägrillen (10, 11) miteinander verbunden sind, wobei die Brücken (13) in Querrichtung gegeneinander abwechselnd versetzt sind, sodass in diesem Umfangsbereich mäanderartig zusammenhängende Profilpositivstrukturen gebildet sind,
**dadurch gekenzeichnet,**
dass der Umfangsbereich zwei nebeneinander verlaufende Blockreihen (6, 8) aufweist, deren Blöcke (7, 9) einander in Querrichtung teilweise überlappen, wobei die sacknutartig endenden Schrägrillen (10) zwischen den Blöcken (7) der ersten Blockreihe (6) unter einem im Wesentlichen gleich großen Winkel (a) zwischen 15° bis 35° sowie gegensinnig zu und abwechselnd mit den sacknutartig endenden Schrägrillen (11) zwischen den Blöcken (9) der zweiten Blockreihe (8) verlaufen und wobei die Einschnitte (14) in sämtlichen Blöcken (7, 9) der beiden Blockreihen (6, 8) parallel zu jenen Schrägrillen (10) verlaufen, die zwischen den Blöcken (7) der ersten Blockreihe (6) verlaufen.

2. Fahrzeugluftreifen nach Anspruch 1, **dadurch gekennzeichnet, dass** die Brücken (13) eine in Fortsetzung des Verlaufes der Schrägrillen (10, 11) ermittelte Breite (b, b') aufweisen, die mindestens 1,5 mm und bis zu 7 mm beträgt.

3. Fahrzeugluftreifen nach Anspruch 1 oder 2, **dadurch gekennzeichnet, dass** die Brücken (13) Außenkanten und Aussenflächen aufweisen, die mit Außenkanten und Aussenflächen der Blöcke (7, 9), die sie verbinden, fluchten.

## Claims

1. Pneumatic vehicle tyre, in particular for use in winter driving conditions, comprising a tread, which is divided by angled grooves (10, 11) and circumferential grooves (12) into rows of blocks (6, 8), the blocks (7, 9) of which are each provided with a number of sipes (14), which run at least substantially parallel to one another and to angled grooves (10, 11) and divide the blocks (7, 9) into block elements (1a), wherein blocks (7, 9) arranged adjacent to one another in a circumferential region running around in the circumferential direction are connected to one another by means of narrow bridges (13) at the inner ends of angled grooves (10, 11) ending in the manner of blind grooves, wherein the bridges (13) are alternately offset from one another in the transverse direction, so that profile positive structures that are contiguous in a meandering manner are formed in this circumferential region,
**characterized**
**in that** the circumferential region has two rows of blocks (6, 8) running next to one another, the blocks (7, 9) of which partially overlap one another in the transverse direction, wherein the angled grooves (10) ending in the manner of blind grooves between the blocks (7) of the first row of blocks (6) run at a substantially equal angle (α) of between 15° and 35° and in opposite directions in relation to and alternately with the angled grooves (11) ending in the manner of blind grooves between the blocks (9) of the second row of blocks (8) and wherein the sipes (14) in all of the blocks (7, 9) of the two rows of blocks (6, 8) run parallel to those angled grooves (10) that run between the blocks (7) of the first row of blocks (6).

2. Pneumatic vehicle tyre according to Claim 1, **characterized in that** the bridges (13) have a width (b, b'), determined as a continuation of the path followed by the angled grooves (10, 11), which is at least 1.5 mm and up to 7 mm.

3. Pneumatic vehicle tyre according to Claim 1 or 2, **characterized in that** the bridges (13) have outer edges and outer surfaces which are in line with outer edges and outer surfaces of the blocks (7, 9) that they connect.

## Revendications

1. Pneumatique de véhicule, en particulier destiné à être utilisé dans des conditions de conduite hivernales, comprenant une bande de roulement, laquelle est divisée, par des rainures obliques (10, 11) ainsi que par des rainures périphériques (12), en rangées de blocs (6, 8), dont les blocs (7, 9) sont pourvus respectivement d'un certain nombre d'entailles (14), lesquelles s'étendent au moins sensiblement parallèlement les unes aux autres et aux rainures obliques (10, 11) et divisent les blocs (7, 9) en éléments de blocs (1a), des blocs (7, 9) disposés de manière adjacente les uns aux autres dans une région périphérique s'étendant dans la direction périphérique étant reliés les uns aux autres par le biais de ponts étroits (13) aux extrémités intérieures de rainures obliques (10, 11) se terminant en forme de rainures borgnes, les ponts (13) étant décalés en alternance les uns par rapport aux autres dans la direction transversale, de sorte que des structures d'éléments de sculpture continues soient formées de manière sinueuse dans cette région périphérique,
**caractérisé en ce que**
la région périphérique comprend deux rangées de blocs (6, 8) s'étendant de manière juxtaposée, dont les blocs (7, 9) se chevauchent partiellement les uns les autres dans la direction transversale, les rainures obliques (10) se terminant en forme de rainures borgnes entre les blocs (7) de la première rangée de blocs (6) s'étendant suivant un angle (α) sensiblement identique compris entre 15° et 35°, ainsi qu'en sens inverse aux rainures obliques (11) se terminant en forme de rainures borgnes, et en alternance avec celles-ci, entre les blocs (9) de la deuxième rangée de blocs (8), et les entailles (14) s'étendant, dans tous les blocs (7, 9) des deux rangées de blocs (6, 8), parallèlement aux rainures obliques (10) qui s'étendent entre les blocs (7) de la première rangée de blocs (6).

2. Pneumatique de véhicule selon la revendication 1, **caractérisé en ce que** les ponts (13) présentent une largeur (b, b') déterminée dans le prolongement du tracé des rainures obliques (10, 11), laquelle largeur est d'au moins 1,5 mm et d'au plus 7 mm.

3. Pneumatique de véhicule selon la revendication 1 ou 2, **caractérisé en ce que** les ponts (13) comprennent des arêtes extérieures et des surfaces extérieures qui sont en alignement avec des arêtes extérieures et des surfaces extérieures des blocs (7, 9) qu'ils relient.
